Europäisches Patentamt

European Patent Office

Office européen des brevets

(19)

(11) Publication number: **0 024 191**
**B1**

(12) EUROPEAN PATENT SPECIFICATION

(45) Date of publication of patent specification: **04.04.84**　(51) Int. Cl.³: **G 01 N 27/30**

(21) Application number: **80302773.9**

(22) Date of filing: **12.08.80**

(54) Reference elements, ion-selective electrodes containing said elements and method of preparing said elements.

(30) Priority: **13.08.79 US 66124**

(43) Date of publication of application:
**25.02.81 Bulletin 81/8**

(45) Publication of the grant of the patent:
**04.04.84 Bulletin 84/14**

(84) Designated Contracting States:
**DE FR GB**

(56) References cited:
**FR - A - 2 206 132**
**FR - A - 2 276 586**
**GB - A - 1 150 698**
**US - A - 3 458 421**
**US - A - 3 591 482**
**US - A - 3 856 649**
**US - A - 4 214 968**

(73) Proprietor: **EASTMAN KODAK COMPANY**
**343 State Street**
**Rochester New York 14650 (US)**

(72) Inventor: **Kim, Sang Hyung**
**Kodak Park**
**Rochester New York (US)**

(74) Representative: **Pepper, John Herbert et al,**
**KODAK LIMITED Patent Department P.O. Box 114**
**190 High Holborn**
**London WC1V 7EA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Reference elements, ion-selective electrodes containing said elements and method of preparing said elements

The present invention relates to metal/metal halide reference elements.

The use of electrochemical cells for the measurement of the concentrations of electrolytes in ionic solutions is widespread. Typically, devices for obtaining such measurements include:

(1) metal/metal salt electrodes which can be either

A. metal/metal halide reference electrodes useful for the measurement of halide ion, e.g. chloride or bromide, or

B. reference electrodes useful in the measurement of ions other than halide, wherein the anion of the metal salt can be other than halide;

(2) reference elements that comprise a reference electrode in contact with an electrolyte, i.e. a second salt containing the anion of the metal salt; and

(3) ion-selective electrodes that comprise reference elements covered by a membrane comprising an ionophore, a carrier solvent, and a hydrophobic binder.

When simultaneously contacted with a solution to be analyzed, the reference element and the ion-selective electrode, in combination, constitute an electrochemical cell, across which a potential develops. Measurement of the potential determines the concentration of ions in solution.

A very commonly used example of such a reference element for use with an ion-selective electrode can be represented as $Ag/AgCl/''XMCl^-''$ ($XMCl^-$ indicating a solution of known $Cl^-$ concentration) and comprises a silver wire having a coating of silver chloride applied thereto by dipping into an aqueous solution of known chloride concentration.

The metal salt (e.g. silver halide) layer of the metal/metal salt electrode is conventionally coated on the metal (e.g. silver) substrate by contacting the substrate with an oxidizing agent in the presence of the appropriate anion. In the case of the reference element, this is done prior to overcoating with an electrolyte layer.

In DE—A—2,722,617, a reference element is described that is formed by coating a support, such as polyethylene terephthalate, with a metallic silver layer, such as by plating techniques, and treating the silver layer overall with an oxidizing agent or a silver halide emulsion and drying. The surface of the silver layer is thus converted to or coated by silver halide. The layer is dried and the silver halide layer is overcoated with an electrolyte layer comprising the electrolyte and a hydrophilic binder. The resulting reference element is a substrate overall coated with a silver layer, overall coated with a silver halide layer, and overall coated with the electrolyte layer. A membrane layer is added resulting in an ion-selective electrode. The circuit is completed with a probe that penetrates the various layers to contact the silver layer for electrical contact.

Although the above method results in an acceptable ion-selective electrode, the method is costly, as it involves a plurality of steps, and the electrical contact of the probe with the silver layer is not always good, as the probe must be forced through the membrane, electrolyte, and silver halide layers to make contact with the silver layer.

In US—A—3,856,649 there is described a solid state electrode the preparation of which includes disposing on a surface portion of a substrate metal a salt layer and then placing a hydrophilic layer in intimate contact with at least a portion of the salt layer.

According to the present invention, there is provided a process for preparing a metal/metal halide reference element characterised by partially coating a substrate metal with a composition comprising a metal salt electrolyte having a cation which is ammonium, an alkali metal or an alkaline earth metal, and a halide or a sulphur-containing anion, a hydrophilic binder, and either an oxidising agent capable of oxidising the substrate metal to metal halide in the presence of halide ions or an emulsion of the said metal halide. Preferably, the metal is silver, the metal halide is silver halide and the oxidising agent is one capable of oxidising silver.

This process is relatively inexpensive, as it requires only one step in coating the metal, and the resulting electrode contains uncoated portions of metal that can be easily contacted with a probe.

According to the present invention there is also provided a metal/metal halide reference element comprising a support having thereon a layer of metal, characterised in that portions of the layer of metal have thereon a composition comprising a metal salt electrolyte having a cation which is ammonium, an alkali metal or an alkaline earth metal, and a halide or a sulphur-containing anion, a hydrophilic binder, and either an oxidising agent capable of oxidising the layer of metal to metal halide in the presence of halide ions or an emulsion of the said metal halide, protions of the layer of metal being free from the composition.

According to the present invention, there is further provided an ion-selective electrode characterised by the reference element as set out in the immediately preceding paragraph having on the composition a membrane layer comprising an ionophore, an ion-carrier solvent, and a hydrophobic binder. The membrane layer is useful in electrodes that measure ions, such as potassium and carbonate.

The metal need only comprise a conductive metal, such as silver, nickel, or copper. The preferred metal is silver and the preferred metal halide is silver halide. The metal can either be self-supported or coated as a layer on a support. Suitable supports are preferably insulating and include glass, paper, and polymers, such as polyesters, e.g. polyethylene terephthalate, and cellulose esters.

The metal layer can be formed *in situ* or applied to a support using any suitable means for depositing the metal. In the case of silver, the silver layer, which is preferably thin, can be formed, for example, by electroless deposition, vacuum-deposition, or deposition of a photographic silver halide layer that is then exposed and developed.

Portions of the metal are then coated with the composition containing the metal salt electrolyte, the oxidizing agent or metal halide emulsion, and the hydrophilic binder. The coating supplies not only the metal halide layer, but also the electrolyte layer of the reference element.

The composition can be applied to the metal using any conventional technique. It is applied, however, to only a portion of the metal, leaving the remainder uncoated. In a preferred embodiment, the composition is applied in stripes to the metal by, for example, roll coating, dipping, laminating, or brush coating. After application, the composition is dried, preferably at 20°C to 95°C for 1 to 30 minutes.

Applying the composition to a portion of the metal means that the metal would, in some areas, be coated and in other areas uncoated. The most preferable method of partially coating the metal is to apply the coating in individual striped areas leaving the remainder of the metal uncoated. Likewise, when a membrane layer, and optionally an overcoat layer, is applied, it is applied in the same areas as the composition, so that the same portions of the metal remain uncoated.

The composition includes a metal salt electrolyte in solid solution with a hydrophilic binder. In a preferred embodiment, the cation of the metal salt electrolyte comprises the ion that the ion-selective electrode is designed to detect. For example, in a potassium ion-selective electrode that uses AgCl as the metal halide, potassium chloride is a logical choice, although sodium chloride can also be used. For sodium ion determinations in a similar configuration, sodium chloride would be useful. Thus, the salt will generally be a water-soluble salt having a cation selected from ammonium, alkali metals, alkaline earth metals, and mixtures thereof or any other suitable cation to which the electrode responds, and a halide or a sulphur-containing anion, depending upon the composition of the metal-salt layer. The binder and metal salt electrolyte can be dissolved in a mutual solvent.

The binder for the metal salt electrolyte can be any hydrophilic material suitable for the formation of continuous, coherent, cohesive layers compatible with the salt of the electrolyte layer and, if present, the solvent. Preferred materials of this type are hydrophilic, natural and synthetic, film-forming polymers, such as polyvinyl alcohol, gelatin, agarose, deionized gelatin, polyacrylamide, polyvinyl pyrrolidone, poly(hydroxyethyl acrylate), poly(hydroxyethyl methacrylate) and polyacrylic acid. Specifically preferred are the hydrophilic colloids, such as gelatin (especially deionized gelatin), agarose, polyvinyl alcohol and poly(hydroxyethyl acrylate).

The composition also contains either an oxidizing agent or a metal halide emulsion. The oxidizing agent can be any material whose electrode potentials are more positive than standard electrode potentials of the metal being coated ($Ag^+ + e^\ominus = Ag$, 0.7996V).

Examples of useful oxidizing agents include $KClCrO_3$, $K_3Fe(CN)_6$, $KMnO_4$, $K_2Cr_2O_7$, $NH_4VO_3$, $(NH_4)_2Ce(NO_3)_6$, and $Fe_2(C_2O_4)_3$. Preferred oxidizing agents are $KClCrO_3$ and $K_3Fe(CN)_6$. Combinations of oxidizing agents can be used. A more thorough listing of oxidizing agents useful herein can be found in *Handbook of Chemistry and Physics,* 50th Edition, The Chemical Rubber Company, 1969, pp D109—114.

The amount of oxidizing agent used can vary depending on its oxidizing power, but, preferably, the coverage should be between 0.01 and 1.0 $g/m^2$.

The composition can, alternatively, include a metal halide emulsion, preferably a silver halide emulsion. In such case, the silver halide is in the form of an emulsion with the hydrophilic binder in the coating composition. The metal can, of course, be other than silver. The silver can, for example, be silver chloride, silver bromide, silver iodide, silver bromoiodide, silver chloroiodide, silver chlorobromide, or silver chlorobromoiodide. Varying coverages of silver halide and hydrophilic binder can be used, but, preferably, the coverage of silver halide is from 1.16 at 1.83 $g/m^2$ of silver as silver halide in 0.054 to 0.54 $g/m^2$ gelatin.

The composition to be coated over the metal can comprise from 0.1 to 7.5 $g/m^2$ of metal salt electrolyte and from 0.5 to 10 $g/m^2$ of hydrophilic binder. Salt concentrations of from 30% to 50% by weight based on the binder are preferred.

The coating composition can also contain other addenda, such as surfactants, for example, saponin and Surfactant 10G, and buffering agents, such as phosphates, and acetates.

Appropriate solvents for the polymeric binder and metal salt electrolyte will depend largely on the nature of the polymer and the salt. Generally, polar solvents suitable for dissolving the salt and the polymer are satisfactory. Thus, water is a preferred solvent for hydrophilic materials, such as polyvinyl alcohol and gelatin.

The coating composition can be formulated by merely adding the metal salt electrolyte and oxidizing agent or silver halide emulsion to the hydrophilic binder in the presence of water and drying.

Since the thickness of the dried composition layer will, to some extent, determine the response characteristics of the electrode, it is desirable to keep the dried layer thin. Dry thicknesss of the order of from 2.5 to 13 $\mu$m (0.1 to 0.5 mil) have been found useful. A preferred thickness is 5 $\mu$m (0.2 mil). Of course, where electrode response characteristics are not critical, the permissible thickness range can be outside these limits.

The reference elements described above are particularly useful in dry operative ion-selective electrodes, which require a membrane layer containing an ionophore.

The electrodes can comprise the reference element described above in a conventional solution electrode, such as a barrel electrode, or can be in the form of a dry operative electrode (both as described in *Research Disclosure* 16113, published by Industrial Opportunities Limited, Homewell, Havant, Hampshire, PO9 1EF, UK, Volume 161, September, 1977). Solution assays can be carried out, for example, using barrel type electrodes containing electrode bodies having therein a membrane. The sample is brought into contact with the membrane and a reference electrode is inserted into the electrode body.

Dry operative electrodes are described in DE—A—2,722,617 and include a reference electrode layer coated with an electrolyte layer and a membrane layer.

The membrane of the electrode designed to measure potassium, sodium, $CO_2$, and other ions requiring a membrane can be coated over the reference element by any means, such as roll coating or dip coating.

The ion-selective membrane can be any membrane layer known in the art.

Among the patents and publications that describe ion-selective membranes of the type useful in the present invention are:

US—A—3,562,129;
US—A—3,753,887;
US—A—3,856,649;
GB—A—1,375,446;
DE—A—2,251,287;

W. E. Morf, G. Kohr and W. Simon, "Reduction of the Anion Interference in Neutral Carrier Liquid-Membrane Electrodes Responsive to Cations," *Analytical Letters*, Volume 7, No. 1, pages 9 to 22 (1974);

W. E. Morf, D. Ammann, E. Pretsch and W. Simon, "Carrier Antibiotics and Model Compounds as Components of Ion-Sensitive Electrodes", *Pure and Applied Chemistry*, Volume 36, No. 4, pages 421 to 439 (1973);

D. Ammann, E. Pretsch and W. Simon, "Sodium Ion-Selective Electrode Based on a Neutral Carrier", *Analytical Letters*, Volume 7, No. 1, pages 23 to 32 (1974);

R. W. Cattrall and H. Freiser, *Analytical Chemistry, 43,* 1905 (1971); and H. James, G. Carmack and H. Freiser, *Analytical Chemistry, 44,* 856 (1972).

Membranes of this type are well known. Such membranes generally include an inert hydrophobic binder or matrix having dispersed therein an ion carrier or selector, commonly referred to as an ionophore, that imparts selectivity to the membrane. These membranes can also contain a carrier solvent for the ionophore to provide adequate ion mobility in the membrane. The carrier solvent can also serve as a plasticizer for the hydrophobic binder.

These binders, ion carriers, and carrier solvents can be those described in DE—A—2,722,617.

The ion-selective electrodes can be manufactured by dipping a conductive wire sequentially into the reference composition and the composition containing the membrane; or a dry operative electrode can be prepared by coating, laminating, or otherwise applying the individual layers one over another to form a planar, multilayer electrode structure.

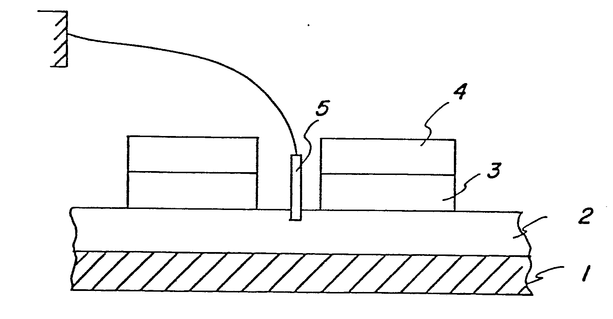

The present invention will now be described by way of example with reference to the single Figure of the accompanying drawing which is a cross-section through an ion-selective electrode according to the present invention.

Referring to the drawing, a manufacturing procedure for a metal/insoluble metal salt/electrolyte reference element would involve applying a reference composition 3 to a layer of silver 2 vacuum-deposited on a polyethylene terephthalate support 1, drying, overcoating the reference element with a solution 4 of the components of the ion-selective membrane and drying to provide a complete ion-selective electrode. Alternatively, the layers can be laminated, so long as intimate contact between layers is achieved and maintained, and uniformity of thickness of the ion-selective membrane is attained. A potential is set up using a probe 5 connected to the silver layer.

The particular drying conditions that must be applied to the reference element in the manufacture of any specific ion-selective electrode will, of course, vary greatly, depending upon the composition of the element layers, particularly the binder used and the solvent or dispersing medium used to form the layer. These can be readily determined by the skilled artisan.

The ion-selectivity of membrane electrodes can be observed by measuring a steady-state difference in electrical potential between reference solutions and sample solutions, as described in DE—A—2,722,617.

The following examples further demonstrate the successful practice of the present invention.

# 0 024 191

## Example 1

A silver-coated polyethylene terephthalate support was stripe-coated with an electrolyte layer containing, in 5 g/m² of gelatin, chloride salts and oxidizing agents, as shown in Table I. A carbonate-sensitive membrane containing 6 g/m² poly(vinyl chloride), 4 g/m² hydroxylated (vinylacetate/vinyl chloride) copolymer, 5 g/m² 4-decyltrifluoroacetophenone, 10 g/m² diisodecylphthalate, 1.25 g/m² tri-octylpropylammonium chloride and 0.05 g/m² surfactant containing a mixture of polydimethylphenyl siloxane and polymethylphenyl siloxane (Dow Corning 510 fluid) was coated over the reference elements in the areas coated with the electrolyte layer. A control reference element was prepared according to the methods of the prior art by overall coating the silver-coated support with an oxidizing agent in the presence of halide ion to form a silver halide layer. The reference electrode was then subsequently overcoated in striped fashion with an electrolyte layer containing gelatin and chloride salts. The membrane layer was stripe coated over the electrolyte layer. The electrodes were tested in the absolute mode using an Ag/AgCl reference electrode and saline samples containing 10, 40 and 100 mM $HCO_3^-$ buffered with tris-HCl (pH 8.25, 0.062—0.576 mM carbonate activities).

The results shown in Table 1 indicate that the electrodes prepared by the method of the present invention exhibit stable potential-time profiles that are comparable to the control reference electrode. The figure Sy.x indicated how well the data points fit on a straight line when plotted. Low Sy.x figures indicate the reproducibility of the data is excellent.

### Table 1
### 5 g/m² Gelatin Reference Layer[1]
### Oxidizing Agents

| Example (Electrode) | NaCl | KCl | KClCrO₃ | K₃Fe(CN)₆ | Base | Slope±SD mv/dec | Sy.x mV |
|---|---|---|---|---|---|---|---|
| Control 1 | 1.88 | 0.63 | — | — | AgCl | −24.9±1.3 | 1.69 |
| Control 2 | 1.88 | 0.63 | — | — | Ag | −35.4±5.7 | 7.84 |
| 1A | 2.4 | — | 0.1 | — | Ag | −28.4±1.6 | 2.19 |
| 1B | 2.1 | — | 0.4 | — | Ag | −19.6±1.5 | 2.05 |
| 1C | 2.4 | — | — | 0.1 | Ag | −34.1±2.0 | 2.80 |
| 1D | 2.1 | — | — | 0.4 | Ag | −28.2±1.8 | 2.47 |
| | | | | | Ideal Value = −29.0 | | |

[1] All units in g/m²

## Example 2

Reference elements prepared as shown in Table II were overcoated with carbonate-sensitive membranes as in Example 1.

### Table II

| Example | NaCl | KCl | KClCrO₃ | K₃Fe(CN)₆ | Base |
|---|---|---|---|---|---|
| Control | 1.88 | 0.63 | — | — | AgCl |
| 2A | 2.4 | — | 0.1 | — | Ag |
| 2B | 2.1 | — | — | 0.4 | Ag |

The electrodes were tested in a differential mode using a buffered $CO_2$ calibrator containing 30.22 mM $CO_2$ as the reference solution and one containing 59.67 mM $CO_2$ as the sample solution. The results shown in Table III indicate that incorporated oxidizing agents surprisingly do not adversely affect the electrode behaviour, i.e., the potentials obtained from the electrodes coated by the method of the present invention are similar to those of the control electrode. This is unexpected because one would expect the addition of oxidizing agents to interfere. Consistently good contact was made to the silver layer in the examples (as evidenced by the low rate of rejections of Example 2B).

5

Table III

| Example | Potential | SD | Total Number of Runs | Percent Rejected |
|---------|-----------|-----|---------------------|------------------|
| Control | −5.1 mV | 0.8 mV | 23 | 4 |
| 2A | −5.8 mV | 2.0 mV | 22 | 8 |
| 2B | −4.7 mV | 0.9 mV | 24 | 0 |

Example 3

A silver-coated polyethylene terephthalate support was coated in striped fashion with an electrolyte layer containing in 5 g/m² of gelatin: a photographic-type, silver-chloride emulsion (10 g/m²), $KNO_3$ (0.83 g/m²) (optional) and octylphenoxy polyethoxyethanol (Triton X—100, Rohm and Haas Company) (0.2 g/m²). A control reference element was prepared according to the method of the control element of Example 1. The reference elements were overcoated with carbonate-sensitive membrane layers as above and evaluated using absolute measurements against a Ag/AgCl reference electrode. Tris-HCl buffered calibrator solutions containing 1, 4, 10, 40 and 100 mM concentrations of $HCO_3^-$ were used in testing the electrodes (pH 8.25, 0.006—0.576 mM carbonate activities). As can be seen in Table IV, the emulsion-containing electrode responded similarly to the control electrode. Therefore, the method of the present invention simplified manufacture of the reference element, gave adequate performance, and provided good contact through the uncoated silver layer.

Table IV

| Example | Slope | Standard Error of Slop | $S_{y,x}*$ |
|---------|-------|-----------------------|-----------|
| Control | −25.9 mV/dec | 0.61 | 1.5 |
| 3 | −24.5 mV/dec | 0.70 | 1.7 |

*All measurements in mV.

**Claims**

1. A process for preparing a metal/metal halide reference element characterised by partially coating a substrate metal (2) with a composition (3) comprising a metal salt electrolyte having a cation which is ammonium, an alkali metal or an alkaline earth metal, and a halide or a sulphur-containing anion, a hydrophilic binder and either an oxidising agent capable of oxidising the substrate metal (2) to metal halide in the presence of halide ions or an emulsion of the said metal halide.

2. The process of claim 1 wherein the oxidising agent is a silver oxidising agent, the metal is silver, and the metal halide is silver halide.

3. The process of claim 1 or 2 wherein the oxidising agent is $KClCrO_3$, $K_3Fe(CN)_6$, $KMnO_4$, $K_2Cr_2O_7$, $NH_4VO_3$, $(NH_4)_2Ce(NO_3)_6$ or $Fe_2(C_2O_4)_3$.

4. The process of any one of claims 1 to 3 wherein the metal is coated as a layer (2) on a support (1).

5. The process of any one of claims 1 to 4 wherein the metal salt electrolyte is a halide of ammonium, an alkali metal, or an alkaline earth metal.

6. A metal/metal halide reference element comprising a support (1) having thereon a layer of metal (2), characterised in that portions of the layer of metal (2) have thereon a composition (3) comprising a metal salt electrolyte having a cation which is ammonium, an alkali metal or an alkaline earth metal, and a halide or a sulphur-containing anion, a hydrophilic binder, and either an oxidising agent capable of oxidising the layer of metal (2) to metal halide in the presence of halide ions or an emulsion of the said metal halide, portions of the layer of metal (2) being free from the composition.

7. The reference element of claim 6 wherein the metal layer (2) is coated with the composition (3) in stripes.

8. The reference element of claims 6 or 7 wherein the oxidising agent is a silver oxidising agent, the metal is silver and the metal halide is silver halide.

9. The reference element of any one of claims 6 to 8 wherein the oxidising agent is $KClCrO_3$, $K_3Fe(CN)_6$, $KMnO_4$, $K_2Cr_2O_7$, $NH_4VO_3$, $(NH_4)_2Ce(NO_3)_6$ or $Fe_2(C_2O_4)_3$.

10. The reference element of any one of claims 6 to 9 wherein the metal salt electrolyte is a halide of ammonium, alkali metal, or alkaline earth metal.

11. The reference element of any one of claims 6 to 10 wherein the composition (3) also contains a surfactant.

12. An ion-selective electrode characterised by the reference element (1, 2, 3) of any one of claims 6 to 11 having on the composition (3) a membrane layer (4) comprising an ionophore, an ion-carrier solvent, and a hydrophobic binder.

13. The ion-selective electrode of claim 12 wherein the membrane layer (4) also contains a surfactant.

## Patentansprüche

1. Verfahren zur Herstellung eines Metall-/Metallhalogenid-Bezugselements, dadurch gekennzeichnet, daß ein Substratmetall (2) teilweise mit einem Material (3) beschichtet wird, das aus einem Metallsalz-Elektrolyten besteht, der ein Kation aufweist, bei dem es sich um Ammonium, ein Alkalimetall oder ein Erdalkalimetall handelt, sowie ein Halogenid oder ein schwefelhaltiges Anion, ein hydrophiles Bindemittel und entweder ein Oxidationsmittel, das das Substratmetall (2) in Gegenwart von Halogenidionen zu Metallhalogenid zu oxidieren vermag, oder eine Emulsion dieses Metallhalogenids.

2. Verfahren nach Anspruch 1, worin das Oxidationsmittel ein Silberoxidationsmittel, das Metall Silber und das Metallhalogenid Silberhalogenid ist.

3. Verfahren nach Anspruch 1 oder 2, worin das Oxidationsmittel aus $KClCrO_3$, $K_3Fe(CN)_6$, $KMnO_4$, $K_2Cr_2O_7$, $NH_4VO_3$, $(NH_4)_2Ce(NO_3)_6$ oder $Fe_2(C_2O_4)_3$ besteht.

4. Verfahren nach einem der Ansprüche 1 bis 3, worin das Metall als Schicht (2) auf einen Träger (1) aufgebracht wird.

5. Verfahren nach einem der Ansprüche 1 bis 4, worin der Metallsalz-Elektrolyt ein Ammoniumhalogenid, ein Alkalimetall oder ein Erdalkalimetall ist.

6. Metall-/Metallhalogenid-Bezugselement mit einem Träger (1), auf dem sich eine Metallschicht (2) befindet, dadurch gekennzeichnet, daß auf Teilen der Metallschicht (2) ein Material (3) vorhanden ist, das aus einem Metallsalz-Elektrolyten besteht, der ein Kation aufweist, bei dem es sich un Ammonium ein Alkalimetall oder ein Erdalkalimetall handelt, sowie ein Halogenid oder ein schwefelhaltiges Anion, ein hydrophiles Bindemittel und entweder ein Oxidationsmittel, das die Metallschicht (2) in Gegenwart von Halogenidionen zu Metallhalogenid zu oxidieren vermag, oder eine Emulsion dieses Metallhalogenids, wobei Teile der Metallschicht (2) von dem Material frei sind.

7. Bezugselement nach Anspruch 6, worin die Metallschicht (2) streifenweise mit dem Material (3) beschichtet ist.

8. Bezugselement nach einem der Ansprüche 6 oder 7, worin das Oxidationsmittel ein Silberoxidationsmittel, das Metall Silber und das Metallhalogenid Silberhalogenid ist.

9. Bezugselement nach einem der Ansprüche 6 bis 8, worin das Oxidationsmittel aus $KClCrO_3$, $K_3Fe(CN)_6$, $KMnO_4$, $K_2Cr_2O_7$, $NH_4VO_3$, $(NH_4)_2Ce(NO_3)_6$ oder $Fe_2(C_2O_4)_3$ besteht.

10. Bezugselement nach einem der Ansprüche 6 bis 9, worin der Metallsalz-Elecktrolyt ein Ammoniumhalogenid, ein Alkalimetall oder ein Erdalkalimetall ist.

11. Bezugselement nach einem der Ansprüche 6 bis 10, worin das Material (3) außerdem ein oberflächenaktives Mittel enthält.

12. Ionenselektive Elektrode, gekennzeichnet durch ein Bezugselement (1, 2, 3) nach einem der Ansprüche 6 bis 11, bei dem sich auf dem Material (3) eine Membranschicht (4) befindet, die ein Ionophor, ein Ionenträger-Lösungsmittel und ein hydrophobes Bindemittel enthält.

13. Ionenselektive Elektrode nach Anspruch 12, worin die Membranschicht (4) außerdem ein oberflächenaktives Mittel enthält.

## Revendications

1. Procédé pour préparer un élément de référence métal/halogénure métallique, caractérisé en ce qu'on enduit partiellement un substrat métallique (2) avec une composition (3) contenant un électrolyte de la classe des sels métalliques qui comprend un cation qui est l'ammonium, un cation d'un métal alcalin ou alcalinoterreux, et un halogénure ou un anion contenant du soufre, un liant hydrophile et, soit un agent oxydant capable d'oxyder le substrat métallique (2) en halogénure métallique, en présence d'ions halogénure, soit une émulsion du dit halogénure métallique.

2. Procédé conforme à la revendication 1, dans lequel l'agent oxydant est un agent oxydant l'argent, le métal est l'argent et l'halogénure métallique est un halogénure d'argent.

3. Procédé conforme à la revendication 1 ou 2, dand lequel l'argent oxydant est: $KClCrO_3$, $K_3Fe(CN)_6$, $KMnO_4$, $K_2Cr_2O_7$, $MN_4VO_3$, $(NH_4)_2Ce(NO_3)_6$ et $Fe_2(C_2O_4)_3$.

4. Procédé conforme à l'une quelconque des revendications 1 à 3, dans lequel le métal est appliqué sous la forme d'une couche (2) sur un support (1).

5. Procédé conformé à l'une quelconque des revendications 1 à 4, dans lequel l'électrolyte de la classe des sels métalliques est un halogénure d'ammonium, un halogénure de métal alcalin ou un halogénure de métal alcalino-terreux.

6. Elément de référence métal/halogénure métallique, qui comprend un support (1) sur lequel est appliquée une couche de métal (2), caractérisé en ce que des parties de la couche de métal (2), sont recouvertes d'une composition qui contient un électrolyte de la classe des sels métalliques qui comprend un cation qui est l'ammonium, un cation de métal alcalin ou alcalino-terreux et un halogénure ou un anion contenant du soufre, un liant hydrophile, et, soit un agent oxydant capable d'oxyder la couche de métal (2) en halogénure métallique en présence d'ions halogénures, soit une émulsion du dit halogénure métallique, des parties de la couche de métal (2) étant dépourvues de cette composition.

7. Elément de référence conforme à la revendication 6, dans lequel la dite composition (3) est appliquée sur la couche de métal (2) sous la forme de bandes.

8. Elément de référence conforme à l'une des revendications 6 ou 7, dans lequel l'agent oxydant est un agent oxydant l'argent, le métal est l'argent et l'halogénure métallique est un halogénure d'argent.

9. Elément de référence conforme à l'une quelconque des revendications 6 à 8, dans lequel l'agent oxydant est: $KClCrO_3$, $K_3Fe(CN)_6$, $KMnO_4$, $K_2Cr_2O_7$, $NH_4VO_3$, $(NH_4)_2Ce(NO_3)_6$ et $Fe_2(C_2O_4)_3$.

10. Elément de référence conforme à l'une quelconque des revendications 6 à 9, dans lequel l'électrolyte de la classe des sels métalliques est un halogénure d'ammonium, un halogénure de métal alcalin ou halogénure de métal alcalino-terreux.

11. Elément de référence conforme à l'une quelconque des revendications 6 à 10, dans lequel la composition (3) contient, en outre, un agent tensio-actif.

12. Electrode sélective pour un ion, caractérisée en ce qu'elle comprend en élément de référence (1, 2, 3) conforme à l'une quelconque des revendications 6 à 11, sur la composition (3) duquel est appliquée une couche membrane (4) qui comprend un ionophore, un solvant porteur d'ion et un liant hydrophobe.

13. Electrode conforme à la revendication 12, dans lequel la couche membrane (4) contient, en outre, un agent tensio-actif.